# EUROPÄISCHE PATENTSCHRIFT

(11) **EP 1 099 738 B1**
(45) Veröffentlichungstag und Bekanntmachung des Hinweises auf die Patenterteilung: **04.06.2003**
(21) Anmeldenummer: 00122432.8
(22) Anmeldetag: 13.10.2000
(51) Int. Cl.: C09J 7/02

(54) **Selbstklebender, hochtransparenter Schutzartikel für Automobilscheiben und andere empfindliche Oberflächen**
Highly transparent and self-adhesive protective article for automobile windows and other delicate surfaces
Article de protection auto-collant et hautement transparent pour vitrages automobiles et autre surfaces délicates

(30) Priorität: 13.11.1999 DE 19954701
(43) Veröffentlichungstag der Anmeldung: 16.05.2001
(73) Patentinhaber: Tesa AG, 20253 Hamburg (DE)
(72) Erfinder: Böhm, Nicolai, 20257 Hamburg (DE); Klemp, Jobst-Waldemar, 22869 Schenefeld (DE); Ströh, Horst-Günther, 22359 Hamburg (DE)

(56) Entgegenhaltungen:
- EP-A- 0 826 754
- GB-A- 940 713

## Beschreibung

Die Erfindung betrifft eine Schutzfolie, die aufgrund ihrer hohen Transparenz und Haftungssicherheit besonders für den temporären Schutz von Automobilglas, aber auch für andere empfindliche Oberflächen wie Metalle, Kunststoffe und Lacke, geeignet ist.

Bei dem langen Weg, den vor allem Exportfahrzeuge vom Herstellwerk bis zum Endverbraucher zurücklegen müssen, beginnend bei der Montage des Fahrzeugs, über die Verladung auf Eisenbahnwaggons, den Eisenbahn- oder Straßentransport, die Abladung vom Eisenbahnwaggon, die Verladung auf Schiffe, die Schiffsreise, das Entladen vom Schiff, den Transport in die zentralen Lager und den Transport bis zum lokalen Händler, ist das Neufahrzeug vielfältigen schädlichen Einflüssen ausgesetzt. Nacharbeiten an Lack und Automobilscheiben, vor allem der Windschutzscheibe, sind an der Tagesordnung, da der Kunde ein einwandfreies Neufahrzeug verlangt. Dies ist ein erheblicher Kostenfaktor für die Hersteller, und es besteht ein großes Interesse an der Reduzierung dieses Aufwandes.

Während geringfügige Lackschäden in der Regel mit einer kleinen Reparaturlackierung behoben werden können, erfordert die Nachbesserung eines Kratzers in einer Automobilscheibe ihren kompletten Austausch.

Besonders teuer ist der Austausch einer Windschutzscheibe. Bei einer mit einem wasserreaktiven PU-Kleber eingeklebten Scheibe, dem heute fast universell angewendeten Verfahren, wird die Scheibe mittels eines Drahtes, mit dem die Klebeschicht durchgeschnitten wird, herausgelöst. Dabei wird häufig der Lack des Scheibenrahmens verletzt, was zusätzliche Nacharbeiten erfordert. Dem Hersteller entstehen so Kosten für die Austauschscheibe, für deren Aus- und Einbau und ggf. für die Nacharbeiten der beim Austausch verursachten Lackschäden. Zusätzlich entstehen z.T. deutlich verlängerte Lieferzeiten und unzufriedene Kunden.

Schon seit einigen Jahren werden besonders exponierte Lackflächen von Neufahrzeugen, wie insbesondere Kofferraumdeckel, Dach und Motorhaube wirkungsvoll mit Hilfe von selbstklebenden Folien abgedeckt. Sie schützen die Lacke gegen leichte Blessuren und Verschmutzungen durch Betriebsmittel wie Batteriesäure oder Kraftstoff, Flugrost und Vogelexkremente. Es handelt sich dabei in der Regel um ungereckte Polyolefinfolien aus Polyethylen, Polypropylen oder Propylenethylencopolymeren sowie Mischungen aus diesen, die zur Verbesserung der Langzeitstabilität mit TiO₂ gefüllt sind. Als Klebmasse finden häufig Polyisobutylen oder Polyethylenvinylacetat Verwendung.

Erstere werden in der EP 0 519 278 A2 offenbart, wobei die Klebmasse auf eine Folie aufgetragen ist, die ihrerseits zum Schutz von Automobilen dient Der Haftklebstoff basiert auf Polyisobutylenkautschuk, der ein dynamisches Elastizitätsmodul von 2 x 10⁵ bis 7 x 10⁶ dyn/cm², dies entspricht in SI-Einheiten einem Wert von 2 x 10⁴ bis 70 x 10⁴ Pa, bei 60 °C aufweist. Der Kleber kann darüber hinaus mit einem Silikonöl oder einem niedermolekularen Acrylpolymerisat abgemischt sein.

In DE 196 35 704 A1 wird eine selbstklebende Oberflächenschutzfolie aus Polyolefinen mit einem Kleber aus Polyethylenvinylacetat (EVA) mit einem Vinylacetatgehalt von 40 Mol-% bis 80 Mol-%, insbesondere 70 Mol-%, und mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz beschrieben. EVA in der beanspruchten Form verfügt über eine gute Anfangshaftkraft auf Lack und eine gute Lackverträglichkeit. Die hohe Endklebkraft auf Lacken und Glasflächen ermöglicht zwar eine hohe Verklebungssicherheit, erfordert aber einen unverhältnismäßig großen Kraftaufwand beim Abziehen der Folie, was bei Personal, das täglich mit dem Demaskieren beschäftigt ist, zu gesundheitlichen Beeinträchtigungen führen kann. Es kommt bedingt durch die hohe Klebkraft überdies zu häufigem Reißen beim Demaskieren, so daß die Folie nicht in einem Stück entfernt werden kann.

Solche im Stand der Technik angegebenen undurchsichtigen, weißen folien lassen sich allerdings nicht als Scheibenschutz verwenden, da die maskierten Fahrzeuge im Zuge ihrer Distribution mehrfach bewegt und rangiert werden müssen und eine freie Sicht durch die Scheiben unerläßlich ist.

Vielfach beschrieben sind Fensterfolien, die die Eigenschaften der beklebten Scheiben verändern, zum Beispiel durch verdunkelnde Tönung, IR-Absorption zur Wärmeisolierung oder Antireflexionsbeschichtungen.
In der US 5,925,453 wird beispielsweise eine Fensterfolie beschrieben, die lichtreflektierend und IR-absorbierend ist und auf die Innenseite von gewölbten Autoscheiben aufgeklebt werden kann. Als mögliche Trägermaterialien, die auch mit dem IR-Absorbens mischbar sind, werden u.a. Polyolefine wie Polyethylen und Polypropylen, Polyvinylchlorid und Polyester wie Polyethylenterephthalat und Polybutylenterephthalat bevorzugt. Als mögliche Klebmassen werden Selbstklebemassen, darunter auch synthetische Kautschuke wie Styrolbutadienkautschuk, Polyisobutylen, Styrolblockcopolymere und Polyethylenvinylacetat sowie hitze- und feuchtigkeitsaktivierbare Massen angeführt.
Die beschriebene Folie hat jedoch keine Schutzfunktion, vor allem weil sie von innen auf die konkaven Glasflächen aufgebracht wird. Solcherart Artikel sind üblicherweise für Dauerverklebungen gedacht und müssen damit andere Anforderungsschwerpunkte erfüllen.

Bei einer Schutzfolie für Automobilglas muß neben einer hervorragenden Transparenz besonderer Wert gelegt werden auf problemlose, faltenfreie und schnelle Applizierbarkeit, auf eine ausgewogene, d.h. nicht zu schwache Klebkraft, so daß Ablösen unter Windoder Fahrtwindeinfluß oder gar selbsttätiges Ablösen vermieden wird, aber auch nicht zu starke Klebkraft, so daß die Folie ohne übermäßigen Kraftaufwand oder gar Zerreißen wieder entfernt werden kann. Zudem muß die Folie anwendungstypische Außenbewitterungsperioden von ca. einem halben Jahr überstehen, ohne zu verspröden, blind zu werden oder Masserückstände beim Entfernen zu hinterlassen. Die oben genannten Anforderungen stellen hohe Ansprüche an Folie und Klebmasse sowie die Abstimmung der beiden Komponenten aufeinander.

Die Firma Beiersdorf AG, Hamburg, Deutschland vertreibt seit Jahren mit dem Artikel 4604 PV1 eine transparente Schutzfolie, die auch für den Scheibenschutz verwendet wird, aber in vielfacher Hinsicht nicht die Kundenanforderungen an Transparenz, Witterungsbeständigkeit und Verklebungssicherheit für diesen Einsatzzweck erfüllt. Der erwähnte Artikel besteht aus einem Polyethylenträger und ist mit einer Acrylatselbstklebemasse beschichtet. Die Folie ist leicht trüb, was besonders bei seitlicher Lichteinstrahlung sehr störend in Erscheinung tritt. Nach wenigen Wochen Freibewitterung versprödet die Folie unter dem UV-Lichteinfluß, so daß sie nicht mehr in einem Stück abziehbar ist und die Klebmasse großflächig auf der Scheibe verbleibt. Überdies verliert die Folie ihre Hafteigenschaften bei Temperaturen über 60 °C, die bei Sonneneinstrahlung mühelos erreicht werden, woraufhin sich schrumpfbedingt Falten aufwerfen.

In GB 940 713 A ist ein durch Polyether (Polyethylenglykol, Polypropylenglykol und Polybutylenglykol) weichgemachtes EVA mit 10 bis 70 Gew.-% Vnylacetatanteil beschrieben, wobei der Sinn des Polyetnerzusatzes die weichmachende Wirkung Ist, wenn die Mischung vulkanisiert werden soll. Als Folge des Weichmacherzusatzes erhalten einige Mischungen im nicht vulkanisierten Zustand klebende Eigenschaften.

Aufgabe der Erfindung ist es, eine Oberflächenschutzfolie für Automobilglas, insbesondere Windschutzscheiben, sowie andere empfindliche Flächen zur Verfügung zu stellen, die die geschilderten Nachteile des Standes der Technik nicht oder nicht in dem Maße zeigt. Insbesondere soll die Oberflächenschutzfolie neben einer ausgeprägten Initialklebkraft Ober eine ausgewogene Endklebkraft und eine außerordentlich hohe Transparenz sowie Witterungsbeständigkeit verfügen.

Gelöst wird diese Aufgabe durch eine Oberflächenschutzfolie, wie sie im Hauptanspruch niedergelegt ist. Gegenstand der Unteransprüche sind dabei vorteilhafte Weiterbildungen der Oberflächenschutzfolie.

Demgemäß betrifft die Erfindung den Aufbau einer Oberflächenschutzfolie, enthaftend einen transparenten Träger aus Polypropylen oder Propylenethylencopolymer, der einen Lichtschutzstabilisator enthält, und einer Selbstklebemasse aus Polyethylenvinylacetat (EVA) mit einem VA-Anteil von 40 bis 80 Gew.-% und einem Schmelzindex MFI nach ISO 1133 (A/4) von 0,5 bis 25 g/10 min bei 190 °C und 2,16 kg, die mit D bis 35 Gew.-% eines Polyethers der Form

XO-[(CH₂)₄-O]-Y (1)

oder

XO-[(CH(CH₃)-CH₂-O]-Y (2),

mit einem Molekulargewichtsmittelwert M_{w} = 200 bis 100.000 g/mol abgemischt ist, wobei X und Y gewählt werden aus der Gruppe H-, (CₙH₂ₙ₊₁)- mit n = 1 bis 20, CH₂=CHCO-, CH₃CH(NH₂)CH₂-, 2,3-Epoxypropyl-, C₆H₅-CO-, CH₂=C(CH₃)-CO-.

In einer bevorzugten Ausführungsform besteht die Oberflächenschutzfolie aus einer ungereckten Folie von 30 von 120 um Dicke, vorzugsweise 35 von 80 µm Dicke, bestehend aus einem random-Propylenethylencopolymer mit 2 bis 10 Gew.-%, vorzugsweise 4 bis 8 Gew.-% Ethylenanteil und mehr als 0,3 Gew.-%, vorzugsweise mehr als 0,5 Gew.-%, eines Lichtschutzstabilisators.

Die Klebmasse besteht aus Polyethylenvinylacetat mit einem VA-Anteil von 40 bis 80 Gew.-%, vorzugsweise 45 bis 70 Gew.-%, und einem Zusatz von (1) oder (2) von 0 bis 35 Gew.-%, vorzugsweise von 0 bis 20 Gew.-%, vorzugsweise in einer Auftragsstärke von 8 bis 50 g/m², besonders vorzugsweise 10 bis 30 g/m².

Zwischen Klebmasse und Folie kann sich ein Primer aus EVA mit einem VA-Anteil von 20 bis 50 Gew.-%, vorzugsweise von 25 bis 40 Gew.-%, befinden, insbesondere in 5 bis 20 µm Dicke, vorzugsweise in 5 bis 15 µm Dicke, der mit der Trägerschicht coextrudiert wird. Die Folie wird in dieser bevorzugten Form direkt nach dem Beschichten in endgültiger Form aufgewickelt. Der vorgeschlagene Primer verfügt sowohl allein als auch im Verbund mit der Folie über eine hervorragenden Transparenz.

Die Verwendung der beanspruchten Propylenethylencopolymere vereinigt eine für diesen Anwendungszweck hervorragend geeignete Transparenz und Oberflächenglätte mit großer Flexibilität, so daß auch gewölbte Oberflächen faltenfrei zu bekleben sind. Für die mechanischen und optischen Eigenschaften der Folie sind neben der Rohstoffauswahl auch die Herstellbedingungen von Bedeutung. Vorteilhaft für die gewünschten Eigenschaften ist das Gießverfahren, wobei die Kühlwalzentemperatur zwischen 10 und 25 °C betragen sollte, um eine möglichst feine Kristallisation zu ermöglichen.

Unter Anwendungsbedingungen bleibt die Transparenz auch nach Einsatz der Scheibenwischer und einem halben Jahr Florida-Klima in solchem Maße erhalten, daß das Fahrzeug immer noch gefahrlos bewegt werden kann.

Besonders geeignet zur Sicherstellung einer anwendungsgerechten Langlebigkeit des Folienmaterials sind HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9).

Die beanspruchte Klebmasse auf Basis EVA, mit und ohne Polyetherzusatz, ist für Glasoberflächen sehr geeignet, denn sie besitzt die Eigenschaft, bündig auf Glas aufzufließen und einen nahezu unsichtbaren Phasengrenze zwischen Glas und Masse zu erzeugen. Das EVA in der beschriebenen Form bildet dabei das Polymergrundgerüst der Klebmasse mit einem mäßig ausgeprägten Tack und einer rasch ansteigenden Klebkraft darauf, die innerhalb einiger Tage ihren Endwert annimmt, wobei dieser unter Wärmeeinwirkung beschleunigt erreicht wird.

Da es sich um ein chemisch unvemetztes Polymergerüst handelt, das aufgrund seines Monomerverhältnisses nur sehr schwach kristallin ist, nimmt das Molekulargewicht, das direkt mit dem MFI korreliert, eine entscheidende Stellung in bezug auf die Kohäsivität der Klebmasse ein. Ein MFI von 1 bis 5 hat sich dabei als günstiger Wert erwiesen. Die Zumischung eines Teils des EVA mit einem MFI von bis zu 25 kann aber zur Fließeigenschaftsverbesserung beitragen, wenn die Klebmasse aus der Schmelze aufgebracht oder zusammen mit einem Träger coextrudiert werden soll.

Der optionale Zusatz der beschriebenen Polyether wirkt klebkraftreduzierend bei gleichzeitigem Erhalt der erforderlichen Anfaßklebrigkeit, der Alterungsstabilität, der Transparenz, der gesundheitlichen und umweltmäßigen Unbedenklichkeit und der Belagsfreiheit der beklebten Glasoberflächen nach dem Demaskieren, falls die Endklebkraft der Klebefolie als zu hoch empfunden wird. Auch das Abrollverhalten der zu Rollen gewickelten Schutzfolien kann durch Zusatz der beschriebenen Polyether gegenüber der reinen EVA-Masse reduziert werden. Je nach Anteil des zugemischten Polyethers läßt sich die klebkraftreduzierende Wirkung stufenlos regeln.

Die Klebmasse läßt sich sowohl aus Lösung als auch aus der Schmelze, d.h. als Hotmelt oder durch Coextrusion verarbeiten. Vorteilhaft ist eine Auftragsstärke von 10 bis 30 g/m². Sie gewährleistet ein ausreichendes Massepolster, um bündig aufzufließen, ohne daß es zu nennenswerten Masserückständen kommt.

Für die optisch sehr hohen Ansprüche an eine Schutzfolie für Scheiben oder Glas allgemein, Anwendungsfelder, für die die erfindungsgemäße Oberflächenschutzfolie besonders geeignet ist, ist es zwingend notwendig, die Folie direkt nach der Beschichtung in endgültiger Form falten- und blasenfrei aufzurollen. Ein nachträgliches Umwickeln ist für die optischen Eigenschaften sehr nachteilig, da sich Falten und Blasen irreversibel in den Klebmassefilm eindrücken. Auch intermediäre Trennmedien wie silikonisiertes Papier sind ungeeignet, da sich die stets leicht rauhe Struktur in das Klebmassepolster eindrückt und das Produkt mattiert.

Die erfindungsgemäße Oberflächenschutzfolie für insbesondere Automobilglasscheiben wird nachfolgend in bevorzugter Ausführung anhand mehrerer Beispiele von Oberflächenschutzfolien beschrieben, ohne damit die Erfindung in irgendeiner Weise beschränken zu wollen. Des weiteren sind zwei Vergleichsbeispiele aufgeführt, in denen ungeeignete Oberflächenschutzfolien dargestellt sind.

### Beispiele

### Beispiel 1

Auf einer Gießfolienanlage wurden 99,3 Gew.-Teile Daplen KFC 2008 (PCD) und 0,7 Gew.-Teile des HALS-Stabilisators Tinuvin 770 in 45 µm Dicke zusammen mit einem Primer aus Polyethylenvinylacetat mit einem VA-Anteil von 26 Gew.-% in 10 µm Dicke auf eine Kühlwalze von 15°C coextrudiert. Die Folie hatte eine hervorragende Transparenz, Oberflächenglätte und Gleichmäßigkeit.

Diese Folie wurde mit einer toluolischen Lösung von Polyethylenvinylacetat mit einem VA-Anteil von 60 Gew.-% so beschichtet, daß nach dem Trocknen eine Klebefolie von 60 um Gesamtdicke resultierte. Direkt nach dem Beschichten wurde die Folie unter Zuhilfenahme einer Andruckwalze falten- und blasenfrei zu Rollen von 100 m Länge aufgewickelt.

Die klebtechnischen Eigenschaften sind untenstehend aufgeführt:

| **Parameter*** | **Meßwert, N/cm** |
|---|---|
| Klebkraft auf Stahl | 1,2 |
| Klebkraft auf Glas nach 30 min | 0,3 |
| Klebkraft auf Glas nach 3 d RT | 0,7 |
| Klebkraft auf Glas nach 3 d 90 °C | 2,1 |
| Abzugskraft von der Rückseite nach 1 m 40 °C | 0,9 |

| | |
|---|---|
| * bei 300 mm/min, Winkel 180° (Abzugskraft 90°), 23 °C ± 1 °C, 50 % ± 5 % relative Feuchte. | |

Die Folie ließ sich mit mäßigem Kraftaufwand, aber frei von nennenswerten Verdehnungen und glatt, d.h. ohne Rattermarken, von der Rolle abwickeln und faltenfrei auf einer Windschutzscheibe des Volkswagen Golf IV als Beispiel für eine gewölbte Glasoberfläche verkleben.
Die Klebmasse benetzte das Glas in solcher Weise, daß nur wenige die Durchsicht störende Luftbläschen eingeschlossen wurden. Diese hatten sich nach 24 Stunden nochmals verringert. Der optische Gesamteindruck der beklebten Scheibe war sehr befriedigend. Nach Lagerung der Windschutzscheibe über 3 Tage bei 90 °C konnte die fest haftende Folie ohne Klebmasserückstände und Zerreißen der Folie abgezogen werden.

Auf Fensterglas verklebte Muster wurden einer UV-Alterung unterzogen (600 h nach DIN 53387 1-A-X). Die Folie ließ sich einwandfrei von der Testscheibe abziehen und wies nur eine minimal erhöhte Trübung gegenüber einem frischen Muster auf.

### Beispiel 2

Eine Folie wie in Beispiel 1 beschrieben wurde mit einer toluolischen Lösung von 95 Gew.-Teilen Polyethylenvinylacetat mit einem VA-Anteil von 50 Gew.-% und 5 Gew.-Teilen des Polyethers Arcol Polyol 1042 (Arco, Gent, Belgien) so beschichtet, daß nach dem Trocknen eine Klebefolie mit 60 µm Gesamtdicke resultierte. Direkt nach dem Beschichten wurde die Folie unter Zuhilfenahme einer Andruckwalze falten- und blasenfrei zu Rollen von 100 m Länge aufgewickelt.

Die klebtechnischen Eigenschaften sind untenstehend aufgeführt:

| **Parameter*** | **Meßwert, N/cm** |
|---|---|
| Klebkraft auf Stahl | 0,3 |
| Klebkraft auf Glas nach 30 min | 0,3 |
| Klebkraft auf Glas nach 3 d RT | 0,8 |
| Klebkraft auf Glas nach 3 d 90 °C | 1,6 |
| Abzugskraft von der Rückseite nach 1 m 40 °C | 0,7 |

| | |
|---|---|
| * bei 300 mm/min, Winkel 180° (Abzugskraft 90°), 23 °C ± 1 °C, 50 % ± 5 % relative Feuchte. | |

Die Folie ließ sich ohne großen Kraftaufwand, frei von nennenswerten Verdehnungen und glatt, d.h. ohne Rattermarken, von der Rolle abwickeln und faltenfrei auf einer Windschutzscheibe des Volkswagen Golf IV als Beispiel für eine gewölbte Glasoberfläche verkleben.

Die Klebmasse benetzte das Glas in solcher Weise, daß nur sehr wenige die Durchsicht störende Luftbläschen eingeschlossen wurden. Diese hatten sich nach 24 Stunden fast vollkommen verflüchtigt. Der optische Gesamteindruck der beklebten Scheibe war sehr befriedigend. Nach Lagerung der Windschutzscheibe über 3 Tage bei 90 °C konnte die Folie ohne große Mühe und Zerreißen der Folie rückstandsfrei abgezogen werden.

Auf Fensterglas verklebte Muster wurden einer UV-Alterung unterzogen (600 h nach DIN 53387 1-A-X). Die Folie ließ sich einwandfrei von der Testscheibe abziehen und wies nur eine minimal erhöhte Trübung gegenüber einem frischen Muster auf.

### Beispiel 3

Eine Folie wie in Beispiel 1 beschrieben wurde mit einer toluolischen Lösung von 90 Gew.-Teilen Polyethylenvinylacetat mit einem VA-Anteil von 50 Gew.-% und 10 Gew.-Teilen des Polyethers PoIyTHF 2900 (BASF) so beschichtet, daß nach dem Trocknen eine Klebefolie mit 60 µm Gesamtdicke resultierte. Direkt nach dem Beschichten wurde die Folie unter Zuhilfenahme einer Andruckwalze falten- und blasenfrei zu Rollen von 100 m Länge aufgewickelt.

Die klebtechnischen Eigenschaften sind untenstehend aufgeführt

| **Parameter*** | **Meßwert, N/cm** |
|---|---|
| Klebkraft auf Stahl | 0,2 |
| Klebkraft auf Glas nach 30 min | 0,3 |
| Klebkraft auf Glas nach 3 d RT | 0,7 |
| Klebkraft auf Glas nach 3 d 90 °C | 1,4 |
| Abzugskraft von der Rückseite nach 1 m 40 °C | 0,7 |

| | |
|---|---|
| * bei 300 mm/min, Winkel 180° (Abzugskraft 90°), 23 °C ± 1 °C, 50 % ± 5 % relative Feuchte. | |

Die Folie ließ sich ohne großen Kraftaufwand, frei von nennenswerten Verdehnungen und glatt, d.h. ohne Rattermarken, von der Rolle abwickeln und faltenfrei auf einer Windschutzscheibe des Volkswagen Golf IV als Beispiel für eine gewölbte Glasoberfläche verkleben.
Die Klebmasse benetzte das Glas in solcher Weise, daß nur sehr wenige die Durchsicht störende Luftbläschen eingeschlossen wurden. Diese hatten sich nach 24 Stunden fast vollkommen verflüchtigt. Der optische Gesamteindruck der beklebten Scheibe war sehr befriedigend. Nach Lagerung der Windschutzscheibe über 3 Tage bei 90 °C konnte die Folie ohne große Mühe und Zerreißen der Folie rückstandsfrei abgezogen werden.

Auf Fensterglas verklebte Muster wurden einer UV-Alterung unterzogen (600 h nach DIN 53387 1-A-X). Die Folie ließ sich einwandfrei von der Testscheibe abziehen und wies nur eine minimal erhöhte Trübung gegenüber einem frischen Muster auf.

### Vergleichsbeispiel 4

Eine Folie wurde hergestellt wie in Beispiel 1 beschrieben, allerdings ohne Lichtschutzmittel. Diese wurde analog Beispiel 3 beschichtet und aufgerollt.
Die Folie hatte identische klebtechnische und verarbeitungsmäßige Eigenschaften wie die aus Beispiel 3.
Auf Fensterglas verklebte Muster wurden einer UV-Alterung unterzogen (600 h nach DIN 53387 1-A-X). Die Folie war vollständig in splitterartiger Weise zerfallen, gänzlich undurchsichtig geworden und nicht mehr vom Untergrund zu entfemen.

### Vergleichsbeispiel 5

Auf einer Gießfolienanlage wurden 99,3 Gew.-Teile Daplen KFC 2008 (PCD) und 0,7 Gew.-Teile des HALS-Stabilisators Tinuvin 770 in 45 µm Dicke auf eine Kühlwalze von 15 °C extrudiert. Noch vor der Aufwicklung wurde die Folie coronabehandelt. Die Folie hatte eine hervorragende Transparenz, Oberflächenglätte und Gleichmäßigkeit.

Auf die coronavorbehandelte Seite der Folie wurde die Lösung eines Acrylatpolymerisats aus 48,5 Gew.-% n-Butylacrylat, 48,5 Gew.-% 2-Ethylhexylacrylat und 3 % Acrylsäure, versetzt mit 0,5 Gew.-% Aluminiumacetylacetonat als Vernetzungsreagenz, so bestrichen, daß nach dem Trocknen eine Klebefolie mit 60 µm Gesamtdicke resultierte. Direkt nach dem Beschichten wurde die Folie unter Zuhilfenahme einer Andruckwalze falten- und blasenfrei zu Rollen von 100 m Länge aufgewickelt.

Die klebtechnischen Eigenschaften sind untenstehend aufgeführt

| **Parameter*** | **Meßwert, N/cm** |
|---|---|
| Klebkraft auf Stahl | 1,5 |
| Klebkraft auf Glas nach 30 min | 1,0 |
| Klebkraft auf Glas nach 3 d RT | 1,2 |
| Klebkraft auf Glas nach 3 d 90 °C | 1,4 |
| Abzugskraft von der Rückseite nach 1 m 40 °C | 0,4 |

| | |
|---|---|
| * bei 300 mm/min, Winkel 180° (Abzugskraft 90°), 23 °C ± 1 °C, 50 % ± 5 % relative Feuchte. | |

Die Folie ließ sich sehr leicht und frei von Verdehnungen, dafür aber mit einem ratternden Geräusch von der Rolle abwickeln. Auf der Folie zeichneten sich deutlich Rattermarken ab, die auch im verklebten Zustand auf einer Windschutzscheibe des Volkswagen Golf IV weiterhin sichtbar blieben. Als sehr nachteilig erwies sich die von Anfang an hohe Verklebungsfestigkeit, die eine Repositionierbarkeit der Folie während des Applikationsprozesses unmöglich machte, da diese beim Wiederanheben irreversibel verdehnt wurde. An diesen Stellen war die Folie nicht mehr faltenfrei aufzubringen. Der optische Gesamteindruck der beklebten Scheibe war somit unbefriedigend.

Auf Fensterglas verklebte Muster wurden einer UV-Alterung unterzogen (600 h nach DIN 53387 1-A-X). Die Folie ließ sich einwandfrei von der Testscheibe abziehen und wies nur eine minimal erhöhte Trübung gegenüber einem frischen Muster auf.

## Patentansprüche

1. Oberflächenschutzfolie, enthaltend einen transparenten Träger aus Polypropylen oder Propylenethylencopolymer, der einen Lichtschutzstabilisator enthält, und einer Selbstklebemasse aus Polyethylenvinylacetat (EVA) mit einem VA-Anteil von 40 bis 80 Gew.-% und einem Schmelzindex MFI nach ISO 1133 (A/4) von 0,5 bis 25 g/10 min bei 190 °C und 2,16 kg, die mit 0 bis 35 Gew.-% eines Polyethers der Form
XO-[(CH₂)₄-O]ₐ-Y (1)
oder
XO-[(CH(CH₃)-CH₂-O]_{b}-Y (2)
mit einem Molekulargewichtsmittelwert M_{w} = 200 bis 100.000 g/mol abgemischt ist, wobei
X und Y gewählt werden aus der Gruppe H-, (CₙH₂ₙ₊₁)- mit n = 1 bis 20, CH₂=CHCO-, CH₃CH(NH₂)CH₂-, 2,3-Epoxypropyl- oder C₆H₅-CO-, CH₂=C(CH₃)-CO-.

2. Oberflächenschutzfolie nach Anspruch 1, **dadurch gekennzeichnet, daß** der Träger eine ungereckte Folie von 30 von 120 µm Dicke, vorzugsweise 35 von 80 µm Dicke, ist, die aus einem random-Propylenethylencopolymer mit 2 bis 10 Gew.-%, vorzugsweise 4 bis 8 Gew.-% Ethylenanteil besteht und mehr als 0,3 Gew.-%, vorzuxsweise mehr als 0,5 Gew.-%, eines Lichtschutzstabilisators enthält.

3. Oberflächenschutzfolie nach den Ansprüchen 1 und 2, **dadurch gekennzeichnet, daß** die Selbstklebemasse besteht aus Polyethylenvinylacetat mit einem VA-Anteil von 40 bis 80 Gew.-%, vorzugsweise 45 bis 70 Gew.-%, und einem Zusatz von (1) oder (2) von 0 bis 35 Gew.-%, vorzugsweise von 0 bis 20 Gew.-%, vorzugsweise in einer Auftragsstärke von 8 bis 50 g/m², besonders vorzugsweise 10 bis 30 g/m².

4. Oberflächenschutzfolie nach den Ansprüchen 1 bis 3, **dadurch gekennzeichnet, daß** zwischen Selbstklebemasse und Folie ein Primer aus EVA mit einem VA-Anteil von 20 bis 50 Gew.-%, vorzugsweise von 25 bis 40 Gew.-%, befindet, insbesondere in 5 bis 20 µm Dicke, vorzugsweise In 5 bis 15 µm Dicke, der mit der Trägerschicht coextrudiert wird.

5. Oberflächenschutzfolie nach den Ansprüchen 1 bis 4, **dadurch gekennzeichnet, daß** dem Träger Lichtschutzmittel in einer Menge von mindestens 0,15 Gew.-% bezogen auf den Träger, besonders vorzugsweise mindestens 0,30 Gew.-%, zugesetzt sind.

6. Verwendung der Oberflächenschutzfolie nach den Ansprüchen 1 bis 5 auf Glas, insbesondere auf Scheiben von Kraftfahrzeugen.

## Claims

1. A surface protection film comprising a transparent backing of polypropylene or propylene-ethylene copolymer, which comprises a light stabilizer, and a self-adhesive composition of polyethylene-vinyl acetate (EVA) having a VA fraction of from 40 to 80% by weight and a melt index MFI in accordance with ISO 1133 (A/4) of from 0.5 to 25 g/10 min at 190°C and 2.16 kg, which is blended with from 0 to 35% by weight of a polyether of the form
XO-[(CH₂)₄-O]-Y (1)
or
XO-[(CH(CH₃)-CH₂-O]-Y (2)
having a weight-average molecular weight M_{w} of from 200 to 100,000 g/mol, X and Y being selected from the group consisting of H-, (CₙH₂ₙ₊₁)- where n is from 1 to 20, CH₂=CHCO-, CH₃CH(NH₂)CH₂-, 2,3-epoxypropyl- or C₆H₅-CO-, CH₂=C(CH₃)-CO-.

2. The surface protection film as claimed in claim 1, wherein the backing is an unoriented film of from 30 to 120 µm in thickness, preferably from 35 to 80 µm in thickness, comprising a random propylene-ethylene copolymer having an ethylene fraction of from 2 to 10% by weight, preferably from 4 to 8% by weight, and containing more than 0.3% by weight, preferably more than 0.5% by weight, of a light stabilizer.

3. The surface protection film as claimed in either of claims 1 and 2, wherein the self-adhesive composition comprises polyethylene-vinyl acetate having a VA fraction of from 40 to 80% by weight, preferably from 45 to 70% by weight, and an addition of (1) or (2) of from 0 to 35% by weight, preferably from 0 to 20% by weight, applied preferably at a rate of from 8 to 50 g/m², with particular preference from 10 to 30 g/m².

4. The surface protection film as claimed in any of claims 1 to 3, wherein between self-adhesive composition and film there is a primer comprising EVA having a VA fraction of from 20 to 50% by weight, preferably from 25 to 40% by weight, in a thickness in particular of from 5 to 20 µm, preferably from 5 to 15 µm, which is coextruded with the backing layer.

5. The surface protection film as claimed in any of claims 1 to 4, wherein light stabilizers in an amount of at least 0.15% by weight based on the backing, with particular preference at least 0.30% by weight, have been added to the backing.

6. The use of the surface protection film as claimed in any of claims 1 to 5 on glass, especially on windows of motor vehicles.

## Revendications

1. Film de protection de surface, contenant un support transparent en polypropylène ou en copolymère de propylène et d'éthylène, qui contient un stabilisateur de protection contre la lumière, et une masse auto-adhésive en poly(éthylène-acétate de vinyle) (EVA) avec une proportion d'acétate de vinyle de 40 à 80% en poids et un indice de fusion MFI selon la norme ISO 1133 (A/4) de 0,5 à 25 g/10 minutes à 190°C et 2,16 kg, qui est mélangée avec 0 à 35% en poids d'un polyéther de la forme
XO-[(CH₂)₄-O]-Y (I)
ou
XO-[CH(CH₃)-CH₂-O]-Y (II)
avec un poids moléculaire moyen M_{w} = 200 à 100000 g/mole, X et Y étant choisis parmi le groupe H-, (CₙH₂ₙ₊₁) - avec n = 1 à 20, CH₂=CHCO-, CH₃CH(NH₂)CH₂-, 2,3-époxypropyl- ou C₆H₅-CO-, CH₂=C(CH₃)-CO-.

2. Film de protection de surface selon la revendication 1, **caractérisé en ce que** le support est constitué d'un film non étiré de 30 à 120 µm d'épaisseur, de préférence de 35 à 80 µm d'épaisseur, qui est constitué d'un copolymère aléatoire de propylène et d'éthylène avec 2 à 10% en poids, de préférence 4 à 8% en poids de proportion d'éthylène et plus de 0,3% en poids, de préférence plus de 0,5% en poids d'un stabilisateur de protection contre la lumière.

3. Film de protection de surface selon les revendications 1 et 2, **caractérisé en ce que** la masse auto-adhésive est constituée de poly(éthylène-acétate de vinyle) avec une proportion d'acétate de vinyle de 40 à 80% en poids, de préférence de 45 à 70% en poids et une addition de (I) ou de (II) de 0 à 35% en poids, de préférence de 0 à 20% en poids, de préférence dans une épaisseur d'application de 8 à 50 g/m², de manière particulièrement préférée de 10 à 30 g/m².

4. Film de protection de surface selon les revendications 1 à 3, **caractérisé en ce que** entre la masse auto-adhésive et le film se trouve un substrat de base en EVA présentant une proportion d'acétate de vinyle de 20 à 50% en poids, de préférence de 25 à 40% en poids, en particulier en une épaisseur de 5 à 20 µm, de préférence en une épaisseur de 5 à 15 µm, qui est coextrudé avec la couche support.

5. Film de protection de surface selon les revendications 1 à 4, **caractérisé en ce que** des agents de protection contre la lumière sont ajoutés au support en une quantité d'au moins 0,15% en poids par rapport au support, de manière particulièrement préférée au moins 0,30% en poids.

6. Utilisation du film de protection de surface selon les revendications 1 à 5 sur du verre, en particulier sur les vitres de véhicules automobiles.
